# EUROPÄISCHE PATENTSCHRIFT

(11) **EP 3 170 942 B1**
(45) Veröffentlichungstag und Bekanntmachung des Hinweises auf die Patenterteilung: **30.10.2019**
(21) Anmeldenummer: 16190867.8
(22) Anmeldetag: 27.09.2016
(51) Int. Cl.: E03F 5/02, E02D 29/12, B29C 41/06, B65D 90/00

(54) **KUNSTSTOFFSCHACHTKÖRPER**
PLASTIC SHAFT BODY
CORPS DE TIGE EN PLASTIQUE

(30) Priorität: 12.10.2015 DE 102015219676
(43) Veröffentlichungstag der Anmeldung: 24.05.2017
(73) Patentinhaber: Fränkische Rohrwerke Gebr. Kirchner GmbH + Co KG, 97486 Königsberg/Bayern (DE)
(72) Erfinder: Bayer, Frank, 97486 Königsberg (DE)
(74) Vertreter: Weickmann & Weickmann PartmbB

(56) Entgegenhaltungen:
- WO-A1-2008/135053
- DE-A1- 19 524 474
- FR-A1- 2 824 503
- FR-A5- 2 110 681
- GB-A- 2 280 383
- US-A- 4 884 709

## Beschreibung

Die Erfindung betrifft einen Kunststoffschachtkörper gemäß dem Oberbegriff des Anspruchs 1.

Höchstvorsorglich sei bereits an dieser Stelle darauf hingewiesen, dass das Transportleitungsrohr und das Aufsetzrohr nicht Teil des erfindungsgemäßen Kunststoffschachtkörpers sind.

Auf verschiedenen Anwendungsgebieten, beispielsweise in Entwässerungsanlagen, insbesondere Anlagen zur Entwässerung von Fernstraßen, etwa Autobahnen, sowie Bundes-, Landes- und Kreisstraßen, ist es bekannt, Kunststoffschächte einzusetzen, unter anderem auch Kunststoffschächte, die einen Kunststoffschachtkörper der eingangs genannten Art und ein auf diesen aufgesetztes Aufsetzrohr umfassen. Dabei richtet sich der Innendurchmesser des Kunststoffschachts nach dem jeweiligen Anwendungsfall. Allgemein unterscheidet man begehbare Schächte mit einem Innendurchmesser von mindestens 800 mm (DN800) und nicht begehbare Schächte. Für die Straßenentwässerung haben sich insbesondere 400er- und 600er-Schächte etabliert, für die auch Standard-Schachtabdeckungen verfügbar sind. Ferner werden in der Praxis üblicherweise Transportleitungen mit einem Innendurchmesser von 250 mm (DN250) oder 350 mm (DN350) eingesetzt.

Der Vollständigkeit halber sei erwähnt, dass es auch vorkommen kann, dass eine Schachtabdeckung mit kleinerem Durchmesser, beispielsweise 600 mm, in Kombination mit einem Aufsetzrohr größeren Durchmessers, beispielsweise 1000 mm, verwendet wird. In diesem Fall muss zwischen dem Aufsetzrohr und der Schachtabdeckung zusätzlich noch ein Reduzierstück angeordnet werden.

Die vorstehend angegebenen Bemessungsangaben können auch bei dem erfindungsgemäßen Kunststoffschachtkörper Anwendung finden.

Bei Kunststoffschächten, die einen Kunststoffschachtkörper der eingangs genannten Art und ein auf diesen aufgesetztes Aufsetzrohr umfassen, richtet sich die
Durchmesserangabe für den Schacht insgesamt üblicherweise nach dem Durchmesser des Aufsetzrohrs. Vorzugsweise sollte der Durchmesser des Schachtkörpers nicht viel größer sein als der Außendurchmesser des Aufsetzrohrs, da andernfalls nur höhere Herstellungs-, Transport- und Einbaukosten die Folge wären. Das gleiche gilt auch für die Verwendung von Aufsetzrohren mit größerem Durchmesser.

Ein Beispiel für einen Kunststoffschachtkörper der eingangs genannten Art ist der von der Anmelderin unter der Bezeichnung "AquaTraffic<®>Control" vertriebene Kunststoffschachtkörper. Der Grundkörper dieses Kunststoffschachtkörpers hat eine birnenförmige Gestalt, d.h. an einen im verlegten Zustand unteren, im Wesentlichen kugelsegmentförmig ausgebildeten Abschnitt schließt sich nach oben ein im Wesentlichen kreiskegelstumpfförmiger Abschnitt an. Der im Wesentlichen kugelsegmentförmig ausgebildete Abschnitt stellt dabei im verbauten Zustand die erforderliche statische Stabilität des Kunststoffschachtkörpers sicher, während es der im Wesentlichen kreiskegelstumpfförmiger Abschnitt ermöglicht, gewünschtenfalls noch Sickerleitungsabschnitte vorzusehen, welche oberhalb der Transportleitungsabschnitte, im Wesentlichen parallel zu diesen verlaufend in den Grundkörper einmünden.

In der Praxis hat es sich an den bekannten Kunststoffschachtkörpern als nachteilig erwiesen, dass der Durchmesser des im Wesentlichen kugelsegmentförmig ausgebildeten unteren Abschnitts des Grundkörpers aufgrund der Birnenform deutlich größer ist als der Durchmesser des darauf aufzusetzenden Aufsetzrohrs. Um die bekannten Kunststoffschachtkörper verbauen zu können, ist somit eine erheblich breitere Baugrube bzw. ein erheblich breiterer Leitungsgraben bereitzustellen, als es zum Verlegen alleine der Transportleitungsrohre und des Aufsetzrohrs erforderlich wäre.

Aus dem Dokument FR 2 824 503 A1 ist ein gattungsbildender Kunststoffschachtkörper bekannt, welcher einen zylinderrohrförmigen Grundkörper aufweist.

Ferner sei an dieser Stelle auf die Dokumente FR 2 110 681 A5, GB 2 280 383 A, DE 195 24 474 A1, US 4 884 709 A und WO 2008/135053 A1 hingewiesen.

Es ist daher Aufgabe der Erfindung, einen Kunststoffschachtkörper der eingangs genannten Art bereitzustellen, dessen Verbauen geringere Aushubarbeiten erfordert.

Diese Aufgabe wird erfindungsgemäß durch einen Kunststoffschachtkörper gemäß Anspruch 1 gelöst.

Durch diese Maßnahme trägt der mittlere Höhenabschnitt des Grundkörpers stärker zu dessen Gesamtstabilität bei, so dass der untere Höhenabschnitt verglichen mit dem bekannten Kunststoffschachtkörper schwächer ausgebildet werden kann. Insgesamt kann der Grundkörper und somit der gesamte Kunststoffschachtkörper hierdurch bei gleicher statischer Stabilität schlanker ausgebildet werden, so dass zu seinem Verbauen geringere Aushubarbeiten erforderlich sind.

Der Grundkörper ist im Wesentlichen als Ellipsoid, nämlich als Rotationsellipsoid mit zur Höhenrichtung im Wesentlichen parallel verlaufender Rotationsachse, ausgebildet. Durch diese Gestaltung des Grundkörpers kann bei ansonsten gleichen Abmessungen des Kunststoffschachtkörpers, insbesondere
gleicher Höhe und gleichem Durchmesser des Kunststoffschachtkörpers, die gleiche Stabilität mit geringerem Einsatz an Kunststoffmaterial bereitgestellt werden. Der Kunststoffschachtkörper kann somit kostengünstiger hergestellt werden und ist aufgrund des geringeren Gewichts leichter zu verbauen.

Weist die in Anschlussrichtung verlaufende Halbachse des Ellipsoids eine größere Länge auf als dessen in Querrichtung verlaufende Halbachse, vorzugsweise auch als dessen in Höhenrichtung verlaufende Halbachse, so ergibt sich ein in Anschlussrichtung länglicher Kunststoffschachtkörper. Durch diese Bauart des Kunststoffschachtkörpers kann ein Reinigungsgerät und insbesondere dessen Zuführschlauch, der bauartbedingt einen nach unten begrenzten Biegeradius aufweist, in einfacher Weise durch den Schacht in den Transportleitungsabschnitt eingeführt werden.

Weist die in Anschlussrichtung verlaufende Halbachse des Ellipsoids eine geringere Länge auf als dessen in Querrichtung verlaufende Halbachse, so ergibt sich eine gegenüber seitlichen Belastungen besonders widerstandsfähige Ausbildung. Erfahrungsgemäß sind Belastungen in Anschlussrichtung geringer, da zumindest ein Teil der Erdlasten von den Transportleitungen bzw. den Transportleitungsabschnitten aufgenommen werden.

Der erfindungsgemäße Kunststoffschachtkörper kann mit einer beliebigen Anzahl von seitlich an den Grundkörper anschließenden Transportleitungsabschnitten ausgebildet sein. Weist er lediglich einen Transportleitungsabschnitt auf, so kann er beispielsweise als Startschacht einer Entwässerungsanlage verwendet werden. Weist er zwei Transportleitungsabschnitte auf, so kann er als Kontrollschacht für die Transportleitung genutzt werden. Die beiden Transportleitungsabschnitte können dabei zueinander in einem Winkel von 180° in den Grundkörper einmünden (gerade Durchleitung der Transportleitung) oder in einem von 180° verschiedenen Winkel (V-förmige Anordnung der Transportleitungsabschnitte). Der Kunststoffschachtkörper kann aber auch drei oder mehr Transportleitungsabschnitte aufweisen, um das Einmünden von Nebenleitungen in die Transportleitung zu ermöglichen.

Dabei kann beispielsweise vorgesehen sein, dass der Wert des Verhältnisses der Länge der in im Wesentlichen vertikaler Richtung verlaufenden großen Halbachse zur Länge der in im Wesentlichen horizontaler Richtung verlaufenden kleinen Halbachse des Rotationsellipsoids zwischen etwa 1,2 und etwa 1,7, vorzugsweise zwischen etwa 1,30 und etwa 1,55, beträgt.

In Weiterbildung der Erfindung wird vorgeschlagen, dass das untere Ende des Grundkörpers in Höhenrichtung in einem Abstand von weniger als 5 cm, vorzugsweise weniger als 1 cm, von der Sohle des wenigstens einen Transportleitungsabschnitts angeordnet ist. Auf diese Weise kann sichergestellt werden, dass der Kunststoffschachtkörper dem Durchfluss von Abwasser nur wenig Widerstand aufgrund von Verwirbelungen entgegensetzt.

An dieser Stelle sei darauf hingewiesen, dass es bei der Bezugnahme auf Abschnitte des Grundkörpers sowohl des aus dem Stand der Technik bekannten Kunststoffschachtkörpers als auch des erfindungsgemäßen Kunststoffschachtkörpers vorkommen kann, dass diese Abschnitte aufgrund der Transportleitungsabschnitte einschließlich deren Anschlussmuffen sowie der Aufsetzmuffe im Kunststoffschachtkörper nicht körperlich vorhanden sind, sondern nur als virtuelle Abschnitte, die sich aus der Extrapolation der körperlich vorhandenen Abschnitte des Grundkörper ergeben. Ist beispielsweise das untere Ende des Grundkörpers oberhalb der Sohle der Transportleitungsabschnitte angeordnet, so wird die Wandung des Kunststoffschachtkörpers von den Transportleitungsabschnitten gebildet und nicht vom unteren Ende des Grundkörpers. Gleichwohl ist es aufgrund ergänzender Informationen über die Gestalt des Grundkörpers, beispielsweise der Forderung, dass der Grundkörper als Ellipsoid ausgebildet ist, möglich, aus den körperlich vorhandenen Abschnitten des Ellipsoids dessen weiteren Verlauf und somit auch die Position dessen unteren Endes durch Extrapolation zu ermitteln.

In analoger Weise wird vorgeschlagen, dass das obere Ende des Grundkörpers in Höhenrichtung in einem Abstand von mindestens 5 cm, vorzugsweise mindestens 10 cm, vom unteren Rand der Aufsetzmuffe angeordnet ist.

Wie dies von dem Kunststoffschachtkörper "AquaTraffic®Control" an sich bekannt ist, kann auch bei dem erfindungsgemäßen Kunststoffschachtkörper vorgesehen sein, dass in einem vorbestimmten Abstand oberhalb der Transportleitungsabschnitte wenigstens ein Sickerleitungsabschnitt in den Grundkörper einmündet. Der vorbestimmte Abstand kann dabei der Abstand der oberen Kante des Transportleitungsabschnitts von der unteren Kante des Sickerleitungsabschnitts sein. Beispielsweise kann der vorbestimmte Abstand zwischen etwa 100 mm und etwa 200 mm, vorzugsweise etwa 150 mm, betragen. Der Durchmesser des Sickerleitungsabschnitt kann beispielsweise 150 mm (DN150) betragen.

Zur Herstellung des erfindungsgemäßen Kunststoffschachtkörpers eignet sich beispielsweise das Rotationsgussverfahren. Bei diesem Verfahren erhärtet Kunststoff, der üblicherweise als Granulat in den Formhohlraum eingefüllt und dort verflüssigt wird, an den kühlen Wandungen des Formhohlraums, wo er Schicht für Schicht den Kunststoffschachtkörper bildet. Bei diesem Verfahren kann die Schichtdicke, mit der sich der Kunststoff an jeder Stelle des Kunststoffschachtkörpers niederschlägt, zwar nicht mit der von anderen Herstellungsverfahren, beispielsweise dem Spritzgussverfahren, bekannten Genauigkeit kontrolliert werden. Dies kann aber durch die erfindungsgemäße Gestaltung des Kunststoffschachtkörpers wieder wettgemacht werden. Darüber hinaus zeichnet sich das Rotationsgussverfahren durch die niedrigen Anschaffungskosten für die Gussform aus.

Zur Erleichterung sowohl der Handhabung des erfindungsgemäßen Kunststoffschachtkörpers im Zuge seines Verbauens als auch seiner Lagerhaltung auf unebenem Untergrund, beispielsweise auf der Baustelle, oder auch ebenen Böden, beispielsweise in einer Lagerhalle, wird in Weiterbildung der Erfindung vorgeschlagen, dass an der Anschlussmuffe wenigstens eines Transportleitungsabschnitts wenigstens ein Standfuß ausgebildet ist. Aus verfahrenstechnischen Gründen bilden sich, insbesondere bei Einsatz des vorstehend erwähnten Rotationsgussverfahrens, an der Außenseite des Kunststoffschachtkörpers vorgesehene Vorsprünge an dessen Innenseite üblicherweise in Form von Vertiefungen ab. Hierdurch entsteht im Gebrauch die Gefahr von Schmutzablagerungen in diesen Vertiefungen. Im Bereich der Anschlussmuffen ist diese Gefahr aufgrund der in diese eingeführten Enden der Transportleitungsrohre reduziert, da diese die Vertiefungen überdecken. Ein weiteres Risiko, das von diesen Vertiefungen ausgeht, besteht darin, dass sie die Stabilität des Kunststoffschachtkörpers gefährdende Schwachstellen darstellen. Auch dieses Risiko ist im Bereich der Anschlussmuffen reduziert, wenn nicht gar vollständig ausgeschlossen, da diese keine tragende Funktion haben.

Besonders vorteilhaft ist es dabei, wenn der wenigstens eine Standfuß an der sich konisch verjüngenden Einführungsschräge der Anschlussmuffe ausgebildet ist, da die Enden der Transportleitungsrohre auf jeden Fall bis in den zylindrischen Abschnitt der Anschlussmuffe eingeführt werden müssen. Vorteilhafterweise erstreckt sich der wenigstens eine Standfuß orthogonal zur Längserstreckungsrichtung des zugehörigen Transportleitungsabschnitts über eine Distanz, die mindestens 50% des Durchmessers des Transportleitungsabschnitts beträgt.

Zur weiteren Erhöhung der Stabilität des Kunststoffschachtkörpers wird vorgeschlagen, dass an wenigstens einem Übergangswandungsabschnitt, an dem einer der Transportleitungsabschnitte in den Grundkörper einmündet, wenigstens eine Verstärkungsstrebe angeformt ist, welche sich von einem Wandungsabschnitt des Grundkörpers über den Übergangswandungsabschnitt zu einem Wandungsabschnitt des Transportleitungsabschnitts erstreckt. Die Verstärkungsstrebe verläuft dabei vorzugsweise im Wesentlichen orthogonal zu dem Übergangswandungsabschnitt.

In Weiterbeildung der Erfindung wird vorgeschlagen, dass der Kunststoffschachtkörper aus einem Polyolefin, beispielsweise Polypropylen (PP) oder Polyethylen (PE), vorzugsweise hochdichtem Polyethylen (HDPE), hergestellt ist.

Die Erfindung wird im Folgenden anhand der beigefügten Zeichnung an einer Ausführungsform näher erläutert werden. Es stellt dar:
- Figur 1: eine Seitenansicht eines erfindungsgemäßen Kunststoffschachtkörpers;
- Figur 2: eine längs der Linie II-II in Figur 1 genommene Schnittansicht des Kunststoffschachtkörpers der Figur 1; und
- Figur 3: eine in Richtung des Pfeils III in Figur 1 betrachtete Druntersicht des Kunststoffschachtkörpers der Figuren 1 und 2.

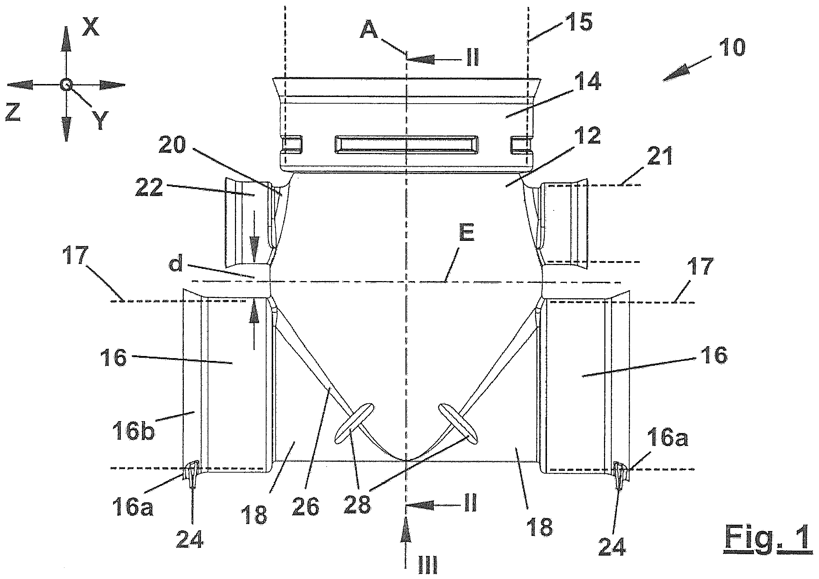

In Figur 1 ist ein erfindungsgemäßer Kunststoffschachtkörper ganz allgemein mit 10 bezeichnet. Er umfasst einen Grundkörper 12, der bezüglich einer im Gebrauch im Wesentlichen vertikal verlaufenden Rotationsachse A rotationssymmetrisch ausgebildet ist. Ferner ist der Grundkörper 12 bezüglich einer im Gebrauch im Wesentlichen horizontal verlaufenden Ebene E spiegelsymmetrisch ausgebildet.

An seinem im Gebrauch oberen Ende verfügt der Kunststoffschachtkörper 10 über eine Aufsetzmuffe 14, die in an sich bekannter Weise zum Verbinden des Kunststoffschachtkörpers 10 mit einem (nicht dargestellten) Aufsetzrohr 15 bestimmt ist. Das Aufsetzrohr kann dabei als Kontrollschacht für ein unter anderem auch den Kunststoffschachtkörper 10 aufweisendes Abwasserleitungssystem verwendet werden. (Nicht dargestellte) Transportleitungsrohre 17 des Abwasserleitungssystems können über Anschlussmuffen 16, welche über Transportleitungsabschnitte 18 mit dem Grundkörper 12 verbunden sind, an den Kunststoffschachtkörper 10 angeschlossen werden.

Optional können in einem vorbestimmten Abstand d oberhalb der Transportleitungsabschnitte 18 auch noch Sickerleitungsabschnitte 20 in den Grundkörper 12 einmünden, welche über weitere Anschlussmuffen 22 an (nicht dargestellte) Sickerleitungen 21 des Abwasserleitungssystems angeschlossen sein können.

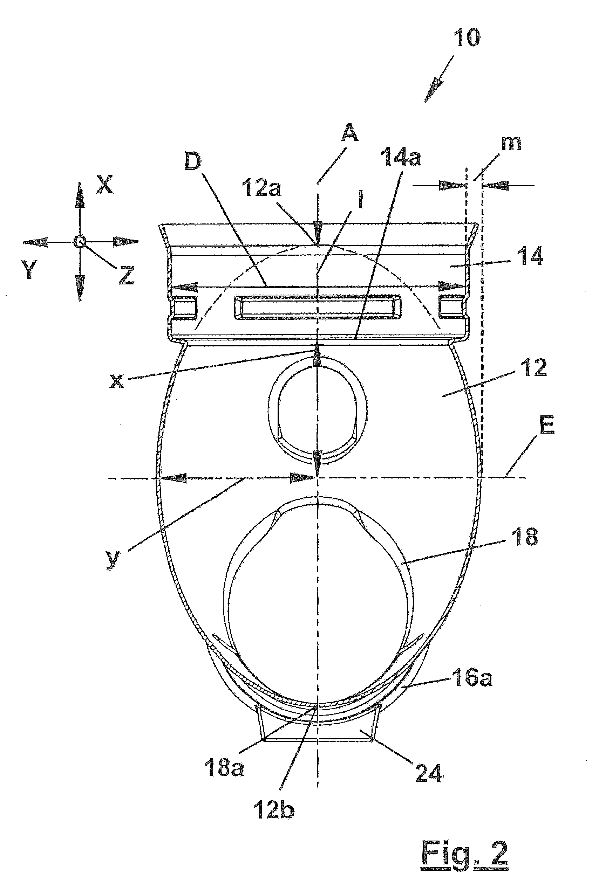

Wie den Figuren zu entnehmen ist, sind aufgrund der Tatsache, dass der Grundkörper mit der Aufsetzmuffe 14, den Transportleitungsabschnitten 18 und gegebenenfalls auch der Sickerleitungsabschnitte 22 verbunden ist, etliche Abschnitte des Grundkörpers 12 nicht körperlich vorhanden. Wie insbesondere Figur 2 zu entnehmen ist, kann der Verlauf der lediglich virtuell vorhandenen Abschnitte aber ohne Weiteres auf Grundlage des Verlaufs der körperlich vorhandenen Abschnitte des Grundkörpers 12 extrapoliert werden. In Figur 2 ist die sich aus den körperlich vorhandenen Abschnitten des Grundkörpers 12 ergebende Extrapolation des in dem dargestellten Ausführungsbeispiel als Rotationsellipsoids ausgebildeten Kunststoffschachtkörpers 10 gestrichelt dargestellt.

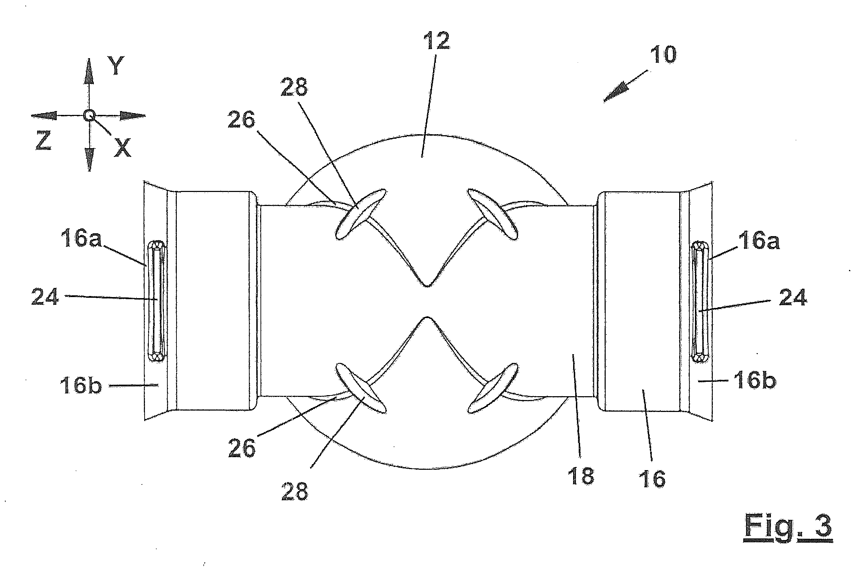

Man erkennt insbesondere in Figur 2, dass der Grundkörper 12 des in den Figuren 1 bis 3 dargestellten Kunststoffschachtkörpers 10 im Wesentlichen als Rotationsellipsoid aufgebaut ist, wobei sich die große Halbachse x der den Rotationsellipsoid durch Rotation um die Achse A bildenden Ellipse im Wesentlichen in vertikaler Richtung erstreckt, während sich die kleine Halbachse y im Wesentlichen in horizontaler Richtung erstreckt, d.h. in der von der Anschlussrichtung Z und der Querrichtung Y aufgespannten Ebene. Diese Gestalt hat den Vorteil, dass sie in statischer Hinsicht besonders stabil ist, während der Grundkörper 12 gleichzeitig schlank ausgebildet sein kann. Insbesondere ragt der Grundkörper 12 in einer in vertikaler Richtung betrachteten Projektion mit seiner größten radialen Erstreckung auf Höhe der Ebene E nur um ein geringes Maß m über die Aufsetzmuffe 14 hinaus. Vorteilhafterweise beträgt das Verhältnis der doppelten Länge der kleinen Halbachse y zum nominellen Durchmesser der Aufsetzmuffe 14 zwischen etwa 1,1 und etwa 1,4.

Um die Bauhöhe des Kunststoffschachtkörpers 10 besonders effektiv ausnutzen zu können, wird vorgeschlagen, dass das obere Ende 12a des Grundkörpers 12 in Höhenrichtung X vom unteren Rand 14a der Aufsetzmuffe 14 einen Abstand von mindestens 5 cm, vorzugsweise mindestens 10 cm aufweist. In analoger Weise kann das untere Ende 12b des Grundkörpers 12 in Höhenrichtung X in einem Abstand von weniger als 5 cm, vorzugsweise weniger als 1 cm, von der Sohle 18a der Transportleitungsabschnitte 18 angeordnet sein. In dem in den Figuren dargestellten Ausführungsbeispiel ist das untere Ende 12b des Grundkörpers 12 im Wesentlichen auf der gleichen Höhe angeordnet wie die Sohle 18a der Transportleitungsabschnitte 18.

Als weiteres optionales Merkmal, welches der Kunststoffschachtkörper 10 ähnlich wie die Sickerleitungsabschnitte 20 aufweisen kann, aber nicht aufzuweisen braucht, können an den Anschlussmuffen 16 für die Transportleitung, und zwar an einem im Gebrauch unteren Umfangsabschnitt 16a dieser Anschlussmuffen 16 Standfüße 24 vorgesehen sein, welche die Handhabung des erfindungsgemäßen Kunststoffschachtkörpers sowohl im Zuge seines Verbauens als auch bei seiner Lagerhaltung auf unebenem Untergrund, beispielsweise auf der Baustelle, oder auch ebenen Böden, beispielsweise in einer Lagerhalle, erleichtern. In dem dargestellten Ausführungsbeispiel sind die Standfüße 24 an der Einweisungsschräge 16b der Anschlussmuffen 16 angeordnet.

Für den Fall besonders hoher Stabilitätsanforderungen an den Kunststoffschachtkörper 10 kann als weiteres optionales Merkmal, welches der Kunststoffschachtkörper 10 ähnlich wie die Sickerleitungsabschnitte 20 und/oder die Standfüße 24 aufweisen kann, aber nicht aufzuweisen braucht, an einem Übergangsabschnitt 26, an dem einer der Transportleitungsabschnitte 18 in den Grundkörper 12 einmündet, wenigstens eine Verstärkungsstrebe 28 angeformt sein, welche sich von einem Wandungsabschnitt des Grundkörpers 12 über den Übergangswandungsabschnitt 26 zu einem Wandungsabschnitt des Transportleitungsabschnitts 18 erstreckt. Die Verstärkungsstrebe 28 verläuft dabei vorzugsweise im Wesentlichen orthogonal zu dem Übergangswandungsabschnitt 26.

Gemäß Vorstehendem kann es zu der in den Figuren dargestellten Ausführungsform, bei der sowohl die Sickerleitungsabschnitte 20 als auch die Standfüße 24 als auch die Verstärkungsstreben 28 vorgesehen sind, verschiedene Ausführungsvarianten geben, beispielsweise eine erste Ausführungsvariante, bei der nur die Sickerleitungsabschnitte, aber weder die Standfüße noch die Verstärkungsstreben vorgesehen sind, eine zweite Ausführungsvariante, bei der nur die Standfüße, aber weder die Sickerleitungsabschnitte noch die Verstärkungsstreben vorgesehen sind, eine dritte Ausführungsvariante, bei der nur die Verstärkungsstreben, aber weder die Standfüße noch die Sickerleitungsabschnitte vorgesehen sind, eine vierte Ausführungsvariante, bei der sowohl die Sickerleitungsabschnitte als auch die Standfüße, nicht aber die Verstärkungsstreben vorgesehen sind, eine fünfte Ausführungsvariante, bei der sowohl die Sickerleitungsabschnitte als auch die Verstärkungsstreben, nicht aber die Standfüße vorgesehen sind, eine sechste Ausführungsvariante, bei der sowohl die Verstärkungsstreben als auch die Standfüße, nicht aber die Sickerleitungsabschnitte vorgesehen sind, und eine siebte Ausführungsvariante, bei der weder die Sickerleitungsabschnitte noch die Standfüße noch die Verstärkungsstreben vorgesehen sind.

## Patentansprüche

1. Kunststoffschachtkörper (10), umfassend:
einen Grundkörper (12), und
wenigstens einen dem unteren Ende (12b) des Grundkörpers (12) benachbart in einer Anschlussrichtung (Z) seitlich an den Grundkörper (12) anschließenden Transportleitungsabschnitt (18), an dessen freiem Ende eine Anschlussmuffe (16) vorgesehen ist, welche zum Anschluss eines Transportleitungsrohrs bestimmt ist, und
wobei am oberen Ende (12a) des Grundkörpers (12) eine Aufsetzmuffe (14) vorgesehen ist, welche zum Anschluss eines Aufsetzrohrs bestimmt ist, und
wobei die Höhe (2x) des Grundkörpers (12) einen größeren Wert aufweist als die größte sowohl orthogonal zur Höhenrichtung (X) als auch orthogonal zur Anschlussrichtung (Z) bestimmte Abmessung (2y) des Grundkörpers (12), wobei der Grundkörper (12) eine zur Höhenrichtung (X) orthogonal verlaufende Symmetrieebene (E) aufweist,
**dadurch gekennzeichnet, dass** der Grundkörper (12) im Wesentlichen als Ellipsoid ausgebildet ist, und
dass der Grundkörper (12) im Wesentlichen als Rotationsellipsoid mit zur Höhenrichtung (X) im Wesentlichen parallel verlaufender Rotationsachse ausgebildet ist.

2. Kunststoffschachtkörper nach Anspruch 1,
**dadurch gekennzeichnet, dass** der Wert des Verhältnisses der Länge (x) der in Höhenrichtung (X) verlaufenden großen Halbachse zur Länge (y) der in im Wesentlichen horizontaler Richtung verlaufenden kleinen Halbachse des Rotationsellipsoids zwischen etwa 1,2 und etwa 1,7, vorzugsweise zwischen etwa 1,30 und etwa 1,55, beträgt.

3. Kunststoffschachtkörper nach Anspruch 1 oder 2,
**dadurch gekennzeichnet, dass** das Verhältnis der doppelten Länge (2y) der kleinen Halbachse des Rotationsellipsoids zum nominellen Durchmesser (D) der Aufsetzmuffe (14) zwischen etwa 1,1 und etwa 1,4 beträgt.

4. Kunststoffschachtkörper nach einem der Ansprüche 1 bis 3,
**dadurch gekennzeichnet, dass** das untere Ende (12b) des Grundkörpers (12) in Höhenrichtung (X) in einem Abstand von weniger als 5 cm, vorzugsweise weniger als 1 cm, von der Sohle (18a) des wenigstens einen Transportleitungsabschnitts (18) angeordnet ist.

5. Kunststoffschachtkörper nach einem der Ansprüche 1 bis 4,
**dadurch gekennzeichnet, dass** das obere Ende (12a) des Grundkörpers (12) in Höhenrichtung (X) in einem Abstand (I) von mindestens 5 cm, vorzugsweise mindestens 10 cm, vom unteren Rand (14a) der Aufsetzmuffe (14) angeordnet ist.

6. Kunststoffschachtkörper nach einem der Ansprüche 1 bis 5,
**dadurch gekennzeichnet, dass** in einem vorbestimmten Abstand (d) oberhalb der Transportleitungsabschnitte (18) wenigstens ein Sickerleitungsabschnitt (20) in den Grundkörper (12) einmündet.

7. Kunststoffschachtkörper nach einem der Ansprüche 1 bis 6,
**dadurch gekennzeichnet, dass** an der Anschlussmuffe (16) wenigstens eines Transportleitungsabschnitts (18) wenigstens ein Standfuß (24) ausgebildet ist.

8. Kunststoffschachtkörper nach Anspruch 7,
**dadurch gekennzeichnet, dass** der wenigstens eine Standfuß (24) an der sich konisch verjüngenden Einführungsschräge (16b) der Anschlussmuffe (16) ausgebildet ist.

9. Kunststoffschachtkörper nach einem der Ansprüche 1 bis 8,
**dadurch gekennzeichnet, dass** an wenigstens einem Übergangswandungsabschnitt (26), an dem einer der Transportleitungsabschnitte (18) in den Grundkörper (12) einmündet, wenigstens eine Verstärkungsstrebe (28) angeformt ist, welche sich von einem Wandungsabschnitt des Grundkörpers (12) über den Übergangswandungsabschnitt (28) zu einem Wandungsabschnitt des Transportleitungsabschnitts (18) erstreckt.

10. Kunststoffschachtkörper nach einem der Ansprüche 1 bis 9,
**dadurch gekennzeichnet, dass** er aus einem Polyolefin, beispielsweise Polypropylen (PP) oder Polyethylen (PE), vorzugsweise hochdichtem Polyethylen (HDPE), hergestellt ist.

11. Kunststoffschachtkörper nach einem der Ansprüche 1 bis 10,
**dadurch gekennzeichnet, dass** er nach dem Rotationsgussverfahren hergestellt ist.

## Claims

1. Plastics shaft body (10) comprising:
a main body (12), and at least one transport line portion (18) that laterally connects to the main body (12) adjacent to the lower end (12b) of the main body (12) in a connection direction (Z), on the free end of which transport line portion a connection sleeve (16) is provided which is intended to connect a transport line pipe, and an attachment sleeve (14) being provided on the upper end (12a) of the main body (12), which attachment sleeve is intended to connect an attachment pipe, and the height (2x) of the main body (12) having a greater value than the largest dimension (2y) of the main body (12) determined both orthogonally to the height direction (X) and orthogonally to the connection direction (Z), the main body (12) having a plane of symmetry (E) that extends orthogonally to the height direction (X), **characterised in that** the main body (12) is designed substantially as an ellipsoid, and **in that** the main body (12) is designed substantially as a spheroid having a rotational axis that extends substantially in parallel with the height direction (X).

2. Plastics shaft body according to claim 1, **characterised in that** the value of the ratio of the length (x) of the semi-major axis of the spheroid that extends in the height direction (X) to the length (y) of the semi-minor axis of the spheroid that extends in a substantially horizontal direction is between approximately 1.2 and approximately 1.7, preferably between approximately 1.30 and approximately 1.55.

3. Plastics shaft body according to either claim 1 or claim 2, **characterised in that** the ratio of the double length (2y) of the semi-minor axis of the spheroid to the nominal diameter (D) of the attachment sleeve (14) is between approximately 1.1 and approximately 1.4.

4. Plastics shaft body according to any of claims 1 to 3, **characterised in that** the lower end (12b) of the main body (12) is arranged, in the height direction (X), at a distance of less than 5 cm, preferably less than 1 cm, from the base (18a) of the at least one transport line portion (18).

5. Plastics shaft body according to any of claims 1 to 4, **characterised in that** the upper end (12a) of the main body (12) is arranged, in the height direction (X), at a distance (I) of at least 5 cm, preferably at least 10 cm, from the lower edge (14a) of the attachment sleeve (14).

6. Plastics shaft body according to any of claims 1 to 5, **characterised in that** at least one drainage line portion (20) opens into the main body (12) at a predetermined distance (d) above the transport line portions (18).

7. Plastics shaft body according to any of claims 1 to 6, **characterised in that** at least one supporting foot (24) is formed on the connection sleeve (16) of at least one transport line portion (18).

8. Plastics shaft body according to claim 7, **characterised in that** the at least one supporting foot (24) is formed on the conically tapering insertion slope (16b) of the connection sleeve (16).

9. Plastics shaft body according to any of claims 1 to 8, **characterised in that** at least one reinforcement strut (28) is moulded on at least one transition wall portion (26) on which one of the transport line portions (18) opens into the main body (12), which strut extends from a wall portion of the main body (12) via the transition wall portion (28) to a wall portion of the transport line portion (18).

10. Plastics shaft body according to any of claims 1 to 9, **characterised in that** it is manufactured from a polyolefin, for example polypropylene (PP) or polyethylene (PE), preferably high-density polyethylene (HDPE).

11. Plastics shaft body according to any of claims 1 to 10, **characterised in that** it is manufactured according to the rotational moulding process.

## Revendications

1. Corps de tige en plastique (10) comprenant :
un corps de base (12), et
au moins une section de conduite de transport (18) se raccordant latéralement au corps de base (12) dans un sens de raccordement (Z) de manière contigüe à l'extrémité inférieure (12b) du corps de base (12), à l'extrémité libre de laquelle un manchon de raccordement (16) est prévu, lequel est destiné au raccordement d'un tube de conduite de transport, et
dans lequel au niveau de l'extrémité supérieure (12a) du corps de base (12) est prévu un manchon de placement (14), lequel est destiné au raccordement d'un tube de placement, et
dans lequel la hauteur (2x) du corps de base (12) présente une valeur supérieure à la dimension (2y) déterminée la plus grande du corps de base (12) non seulement orthogonalement au sens vertical (X) mais aussi orthogonalement au sens de raccordement (Z), dans lequel le corps de base (12) présente un plan de symétrie (E) s'étendant orthogonalement au sens vertical (X),
**caractérisé en ce que** le corps de base (12) est réalisé sensiblement en tant qu'ellipse, et
que le corps de base (12) est réalisé sensiblement en tant qu'ellipse de rotation avec un axe de rotation s'étendant sensiblement parallèlement au sens vertical (X).

2. Corps de tige en plastique selon la revendication 1,
**caractérisé en ce que** la valeur du rapport de la longueur (x) du grand demi-axe, s'étendant dans le sens vertical (X), à la longueur (y) du petit demi-axe de l'ellipse de rotation, s'étendant dans le sens sensiblement horizontal, est entre environ 1,2 et environ 1,7, de préférence entre environ 1,30 et environ 1,55.

3. Corps de tige en plastique selon la revendication 1 ou 2,
**caractérisé en ce que** le rapport de la longueur (2y) double du petit demi-axe de l'ellipse de rotation au diamètre nominal (D) du manchon de placement (14) est entre environ 1,1 et environ 1,4.

4. Corps de tige en plastique selon l'une des revendications 1 à 3,
**caractérisé en ce que** l'extrémité inférieure (12b) du corps de base (12) est agencée dans le sens vertical (X) à une distance de moins de 5 cm, de préférence de moins de 1 cm, de la semelle (18a) de l'au moins une section de conduite de transport (18).

5. Corps de tige en plastique selon l'une des revendications 1 à 4,
**caractérisé en ce que** l'extrémité supérieure (12a) du corps de base (12) est agencée dans le sens vertical (X) à une distance (1) d'au moins 5 cm, de préférence d'au moins 10 cm, du bord inférieur (14a) du manchon de placement (14).

6. Corps de tige en plastique selon l'une des revendications 1 à 5,
**caractérisé en ce qu'**au moins une section de conduite de drainage (20) débouche dans le corps de base (12) à une distance prédéterminée (d) au-dessus des sections de conduite de transport (18).

7. Corps de tige en plastique selon l'une des revendications 1 à 6,
**caractérisé en ce qu'**au moins un pied d'appui (24) est réalisé au niveau du manchon de raccordement (16) d'au moins une section de conduite de transport (18).

8. Corps de tige en plastique selon la revendication 7,
**caractérisé en ce que** l'au moins un pied d'appui (24) est réalisé au niveau du biais d'introduction (16b), se rétrécissant en cône, du manchon de raccordement (16).

9. Corps de tige en plastique selon l'une des revendications 1 à 8,
**caractérisé en ce qu'**au niveau d'au moins une section de paroi de transition (26), au niveau de laquelle une des sections de conduite de transport (18) débouche dans le corps de base (12), est formée au moins une entretoise de renforcement (28), laquelle s'étend depuis une section de paroi du corps de base (12) au-delà de la section de paroi de transition (28) jusqu'à une section de paroi de la section de conduite de transport (18).

10. Corps de tige en plastique selon l'une des revendications 1 à 9,
**caractérisé en ce qu'**il est fabriqué en une polyoléfine, par exemple polypropylène (PP) ou polyéthylène (PE), de préférence en polyéthylène à haute densité (HDPE).

11. Corps de tige en plastique selon l'une des revendications 1 à 10,
**caractérisé en ce qu'**il est fabriqué selon le procédé de coulage par rotation.
